# EUROPÄISCHE PATENTSCHRIFT

(11) **EP 1 241 760 B1**
(45) Veröffentlichungstag und Bekanntmachung des Hinweises auf die Patenterteilung: **13.05.2015**
(21) Anmeldenummer: 02005991.1
(22) Anmeldetag: 15.03.2002
(51) Int. Cl.: H02G 3/06, H02G 3/04

(54) **Kabelführungselement**
Cable guide element
Elément pour guidage de cable

(30) Priorität: 16.03.2001 DE 10112776
(43) Veröffentlichungstag der Anmeldung: 18.09.2002
(73) Patentinhaber: Zumtobel Lighting GmbH, 6850 Dornbirn (AT)
(72) Erfinder: Riedler, Thomas, Ing., 6060 Hall/Tirol (AT); Rüf, Wolfgang, 6850 Dornbirn (AT)
(74) Vertreter: Schmidt-Evers, Jürgen

(56) Entgegenhaltungen:
- EP-A1- 1 354 160
- EP-A2- 0 161 226
- DE-U- 9 003 119
- FR-A- 1 551 204

## Beschreibung

Die vorliegende Erfindung betrifft eine Anordnung zur Bildung eines Stromschienensystems für Leuchten.

Stromschienensysteme oder Lichtbänder finden in vielfältiger Form Verwendung, da sie gegenüber fest installierten oder eingebauten Leuchten eine hohe Flexibilität bei der individuellen Planung von Beleuchtungsstrukturen für spezifische Anwendungen bieten. So bestehen Stromschienensysteme aus mehreren einzelnen Elementen, die nach dem Baukasten-Prinzip zusammengesetzt werden, so dass die gesamte Anordnung an die zu beleuchtenden Räumlichkeiten angepasst werden kann.

Das Grundgerüst eines Stromschienensystems wird durch Tragschienen gebildet, die zu der gewünschten Struktur zusammengesetzt werden und der Halterung der Stromversorgungs- und Steuerleitungen sowie der einzelnen Leuchten dienen. Die Tragschienen besitzen eine hohe Stabilität und bestehen üblicherweise aus Metall.

Am weitesten verbreitet sind U-förmige Tragschienen, welche nach unten geöffnet sind und in denen die Leitungen zur Stromversorgung und/oder zur Übertragung von Steuersignalen für die an den Tragschienen zu befestigenden Leuchten-Module verlaufen. Ein bekanntes Lichtbandsystem, bei dem U-förmige Tragschienen zum Einsatz kommen, wird beispielsweise von der Anmelderin unter der Bezeichnung "Lichtbandsystem ZX" vertrieben. Die Tragschienen können direkt an der Decke befestigt werden, alternativ dazu besteht allerdings auch die Möglichkeit, sie an Seilen oder Ketten aufzuhängen.

Oftmals ist es erwünscht, neben den Strom- und/oder Steuerleitungen für die verschiedenen Leuchten des Stromschienensystems auch weitere Kabel zu verlegen, die nichts mit dem eigentlichen Beleuchtungssystem zu tun haben, beispielsweise Telefonkabel oder Feuermelderkabel. Die Anordnung dieser zusätzlichen Kabel innerhalb der U-förmigen Tragschiene ist allerdings aus Platzgründen nicht ohne weiteres möglich.

Aus der FR 1551 204 A ist eine längliche Leuchte mit einem profilartigen Trägerelement bekannt, in dem Kabel verlegt sind.

Aus der WO 02/059517 A1 ist eine Vorrichtung zur Befestigung von Leitungen bekannt. Die Vorrichtung umfasst einen Leitungskanal, der durch Montagebügel gehalten ist.

Aus der EP 0 161 226 A2 ist ein Installationskanal mit einer Montagekonsole bekannt. Die Montagekonsole umfasst zur Halterung des Installationskanals einen Haltebügel.

Es ist daher Aufgabe der vorliegenden Erfindung, eine Anordnung zur Bildung eines Stromschienensystems für Leuchten anzugeben, die sich besonders zur Halterung zusätzlicher Kabel eignet.

Die Aufgabe wird durch eine Anordnung nach den unabhängigen Ansprüchen gelöst.

Weiterbildungen der Erfindung sind Gegenstand der Unteransprüche.

Gemäß einem ersten Ausführungsbeispiel umfasst die Anordnung ein U-förmiges Kabelkanal-Element, welches an seinem Mittelschenkel in Längsrichtung verlaufende und zum Eingreifen in die Hinterschneidungen der Tragschiene vorgesehene Klemmvorsprünge aufweist. In diesem Fall sind die Kabelkanal-Elemente an den Stellen unterbrochen, wo Befestigungselemente zum Aufhängen der Tragschiene angeordnet sind. Vorzugsweise kann das Kabelkanal-Element einen zusätzlichen Trennschenkel aufweisen, so dass der Kabelkanal in mehrere Bereiche unterteilt wird.

Gemäß einem zweiten Ausführungsbeispiel umfasst die Anordnung ein oder mehrere U-förmige Klemmelemente, welche an ihren Mittelschenkeln Klemmvorsprünge zur Befestigung an der Tragschiene aufweisen. An den Seitenschenkeln dieser Klemmelemente sind dann längliche Seitenwände befestigt, die den Kabelkanal bilden. Diese Lösung ermöglicht es, eine Unterbrechung des Kabelkanals an den Stellen, an denen eine Aufhängung für die Tragschiene vorgesehen ist, zu umgehen. Vorzugsweise weisen die Seitenschenkel der Klemmelemente wiederum Verrastelemente auf, welche ein einfaches Befestigen der Seitenwände ermöglichen. Ferner kann wiederum vorgesehen sein, dass die Klemmelemente einen Trennschenkel zur Unterteilung des Kabelkanals aufweisen.

Gemäß einer dritten Ausführungsform umfasst die Anordnung zwei separate längliche Seitenteile, welche jeweils an einer Längsseite zur Befestigung an der Tragschiene vorgesehene Klemmvorsprünge aufweisen. Auch diese Lösung ermöglicht die Bildung eines Kabelkanals mit durchgängigen Seitenwänden.

Im folgenden soll die Erfindung anhand der beiliegenden Zeichnung näher erläutert werden. Es zeigen:
- Fig. 1: ein erstes Ausführungsbeispiel eines erfindungsgemäßen Kabelführungselements zum Bilden des Kabelkanals in perspektivischer Darstellung;
- Fig. 2: das in Fig. 1 dargestellte Ausführungsbeispiel im Schnitt;
- Fig. 3: ein zweites Ausführungsbeispiel eines erfindungsgemäßen Kabelführungselements in perspektivischer Darstellung;
- Fig. 4: das zweite Ausführungsbeispiel im Schnitt;
- Fig. 5: ein drittes Ausführungsbeispiel, bei dem das Kabelführungselement durch zwei separate längliche Seitenteile gebildet wird, in perspektivischer Darstellung; und
- Fig. 6: das dritte Ausführungsbeispiel im Schnitt.

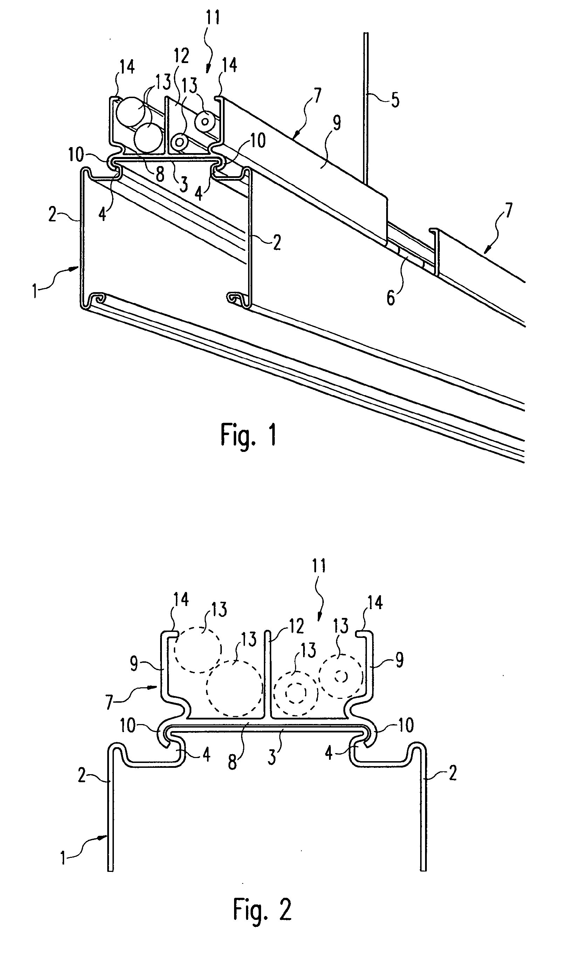

Die das erste Ausführungsbeispiel darstellenden Fig. 1 und 2 zeigen zunächst eine U-förmige und nach unten offene Tragschiene 1, welche das Grundgerüst des Stromschienensystems bildet. Durch das Aneinanderreihen mehrerer derartiger Tragschienen 1 wird das gesamte Stromschienensystem gebildet, wobei nicht nur die Bildung eines einzelnen länglichen Lichtbandes, sondern auch die Bildung zwei- oder sogar drei-dimensionaler Strukturen möglich ist. Innerhalb des durch die beiden Seitenschenkel 2 und den Mittelschenkel 3 der Tragschiene 1 gebildeten Aufnahmeraumes verlaufen die - nicht dargestellten - Leitungen zur Stromversorgung und/oder Übertragung von Steuersignalen für die einzelnen Leuchten. Die Leuchten werden auf die Unterseite der Tragschiene 1 aufgesetzt.

Die Tragschiene 1 selbst wird mittels einer aus einem Seil 5 und einer Befestigungsklammer 6 gebildeten Seilaufhängung an einer Decke befestigt. Die Befestigungsklammer 6 greift dabei in an der Außenseite des Mittelschenkels 3 vorgesehene Hinterschneidungen 4 ein.

Diese an der Oberseite der Tragschiene 1 angeordneten Hinterschneidungen 4 dienen auch der Befestigung mehrerer Kabelführungselemente in Form von U-förmigen Kabelkanal-Elementen 7. Dazu sind an den Seiten des Mittelschenkels 8 eines Kabelkanal-Elements 7 längliche Klemmvorsprünge 10 vorgesehen, welche im aufgesetzten Zustand des Kabelkanal-Elements 7 in die Hinterschneidungen 4 der Tragschiene 1 eingreifen. Vorzugsweise sind diese Klemmvorsprünge 10 aus einem elastischen Material, so daß die Kabelkanal-Elemente 7 auf die Tragschiene aufgeklipst oder eingerastet werden können.

Durch die beiden Seitenwände 9 und den Mittelschenkel 8 des Kabelkanal-Elements 7 wird ein nach oben geöffneter U-förmiger Kabelkanal 11 gebildet, der zur Aufnahme zusätzlicher Kabel 13 verwendet werden kann. Bei diesen zusätzlichen Kabeln 13 kann es sich beispielsweise um Telefonkabel oder Feuermelderkabel handeln, die zur eigentlichen Funktion des Beleuchtungssystems gar nicht notwendig sind, sondern eine andere Aufgabe erfüllen.

Da der Mittelschenkel 8 und die beiden Klemmvorsprünge 10 des Kabelkanal-Elements 7 den Mittelschenkel 3 der Tragschiene 1 vollständig umgreifen, ist die Anordnung eines solchen Kabelkanal-Elements 7 an den Stellen, an denen Befestigungsklammern 6 für die Aufhängung für die Tragschiene 1 vorgesehen sind, nicht möglich. Wie in Fig. 1 dargestellt ist, sind daher zur Bildung des Kabelkanals 11 mehrere Kabelkanal-Elemente 7 notwendig, welche zu beiden Seiten der Befestigungsklammer 6 angeordnet sind.

Die in den Fig. 1 und 2 dargestellten Kabelkanal-Elemente 7 weisen ferner einen zusätzlichen Trennschenkel 12 auf, durch den der Kabelkanal 11 unterteilt wird. Dies kann in solchen Fällen von Vorteil sein, in denen eine Trennung verschiedener Kabelstränge wünschenswert ist.

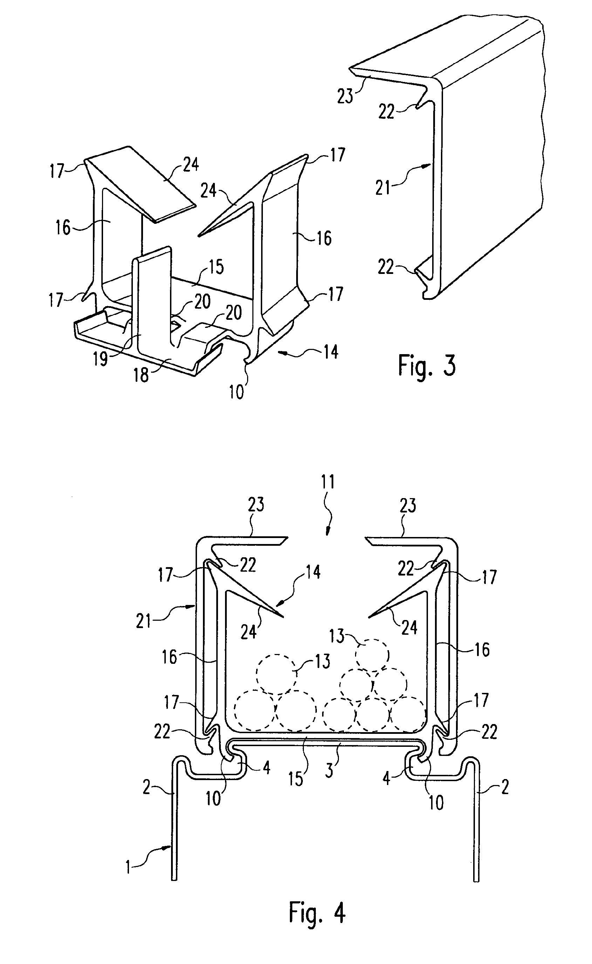

Im Gegensatz zu dem in den Fig. 1 und 2 dargestellten ersten Ausführungsbeispiel kann mit dem in den Fig. 3 und 4 dargestellten zweiten Ausführungsbeispiel eines Kabelführungselements ein durchgängiger Kabelkanal gebildet werden. Hierzu besteht das Kabelführungselement aus einem U-förmigen Klemmelement 14, welches - wie auch die Kabelkanal-Elemente 7 - an seiner Unterseite Klemmvorsprünge 10 aufweist, die zur Befestigung des Klemmelements 14 in die Hinterschneidungen 4 der Tragschiene 1 eingreifen. Auch diese Klemmvorsprünge 10 sind vorzugsweise elastisch, so daß ein einfaches Aufklipsen oder Verrasten mit der Tragschiene 1 möglich ist. Sind die Klemmvorsprünge 10 hingegen starr, so müssen die Klemmelemente 14 in Längsrichtung auf die Tragschiene 1 aufgeschoben werden.

Die beiden Seitenschenkel 16 des Klemmelements 14 weisen jeweils zwei Verrastelemente 17 auf, welche der Halterung länglicher Seitenwände 21 dienen. Diese beiden Seitenwände 21 schließlich bilden den U-förmigen Kabelkanal 11 zur Aufnahme der Kabel 13, wobei die Halterung der Seitenwände 21 jeweils über zwei mit den beiden Verrastelementen 17 zusammenwirkenden Klemmvorsprünge 22 erfolgt. Durch an den Oberseiten der Seitenwände 21 angeordnete und nach innen gerichtete Vorsprünge 23 wird der Kabelkanal 11 zumindest teilweise auch von der Oberseite her geschlossen, so daß das Eindringen von Staub zu einem gewissen Grad unterdrückt wird.

Der Mittelschenkel 16 des Klemmelements 14 ist über zwei Brücken-Verbindungsteile 20 mit einem T-Stück 18 verbunden, dessen nach oben gerichteter Trennschenkel 19 wiederum für eine Trennung der in dem Kabelkanal 11 angeordneten Kabelstränge sorgt. Die beiden nach oben gerichteten Brücken-Verbindungsteile 20 ermöglichen ferner das Anbringen eines Kabelbinders, durch den die Kabelstränge 13 an den Klemmelementen 14 befestigt werden können. An den Oberseiten der Seitenschenkel 16 und des Klemmelementes 14 sind schließlich zwei Vorsprünge 24 angeordnet, die jeweils trichter-artig nach innen geneigt sind, so daß ein einfaches Einbringen der Kabelstränge 13 ermöglicht, ein zufälliges Herausrutschen zur Oberseite hin allerdings verhindert wird.

Bei diesem zweiten Ausführungsbeispiel können in einem ersten Schritt die Klemmelemente 14 an der Oberseite der Tragschienen 1 befestigt werden. Anschließend können die Kabelstränge 13 verlegt und schließlich durch die Seitenwände 21 umschlossen werden. Die Seitenwände 21 können dabei auch an solchen Orten angeordnet sein, an denen eine Befestigungsklammer 6 zur Aufhängung der Tragschiene 1 vorgesehen ist. Die einzige Bedingung besteht darin, die Klemmelemente 14 nicht an den gleichen Orten wie die Befestigungsklammern 6 anzubringen. Somit besteht die Möglichkeit, einen über die gesamte Länge der Tragschiene 1 hinweg geschlossenen Kabelkanal 11 zu bilden.

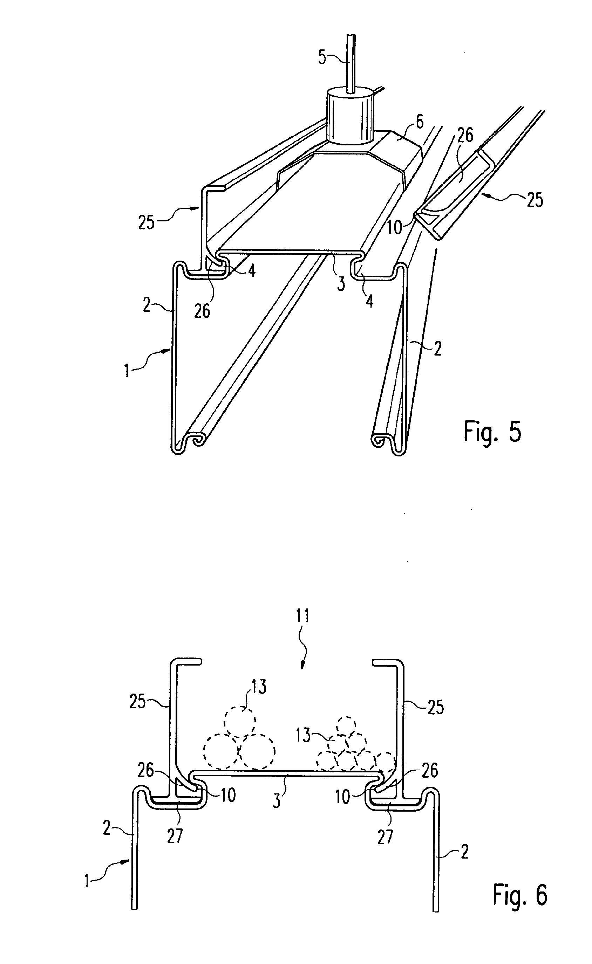

Ein kontinuierlicher Kabelkanal 11 kann auch bei dem in den Fig. 5 und 6 dargestellten dritten Ausführungsbeispiel gebildet werden. Bei diesem Ausführungsbeispiel besteht das Kabelführungselement aus zwei länglichen Seitenteilen 25, die an ihrer Innenseite im unteren Bereich die zur Befestigung vorgesehenen Klemmelemente 10 in Form von elastischen Laschen 26 aufweisen. Gemeinsam mit an der Unterseite angeordneten Stützstreben 27 sorgen die beiden Laschen 26 für ein Verklemmen der Seitenteile 25 mit dem Profil der Tragschiene 1.

Wie in Fig. 5 dargestellt ist, können die Seitenteile 25 auch in dem Bereich an der Tragschiene 1 befestigt werden, in dem Befestigungsklammern 6 zum Aufhängen der Tragschiene 1 angeordnet sind. Somit kann auch in diesem Fall ein über die gesamte Länge der Tragschiene 1 hinweg geschlossener Kabelkanal 11 gebildet werden.

Das erfindungsgemäße Kabelführungselement bietet somit die Möglichkeit, an der Oberseite der Tragschiene einen weiteren Kanal zu bilden, der für die Aufnahme zusätzlicher Kabel oder dergleichen verwendet werden kann. Dieser Kanal kann durch wenige Handgriffe gebildet werden, indem die erfindungsgemäßen Kabelführungselemente einfach auf die Tragschiene aufgesetzt bzw. aufgeklemmt werden.

## Patentansprüche

1. Anordnung zur Bildung eines Stromschienensystems für Leuchten, aufweisend
- eine U-förmige, nach unten offene Tragschiene (1) zum modularen Bilden des Stromschienensystems,
wobei die Tragschiene (1) einen Mittelschenkel (3) und zwei Seitenschenkel (2) umfasst und
- eine Seilaufhängung zur Befestigung der Tragschiene (1) an einer Decke,
wobei die Seilaufhängung ein Seil (5) und eine Befestigungsklammer (6) aufweist, wobei der Mittelschenkel (3) der Tragschiene (1) an seiner Außenseite Hinterschneidungen (4) aufweist und die Befestigungsklammer (6) der Seilaufhängung in die Hinterschneidungen (4) eingreift,
**gekennzeichnet durch**
ein U-förmiges Kabelkanal-Element (7), das einen Mittelschenkel (8) aufweist, an dessen Seiten längliche Klemmvorsprünge (10) vorgesehen sind, die zur Befestigung des Kabelkanal-Elements (7) an der Tragschiene (1) in die Hinterschneidungen (4) der Tragschiene (1) eingreifen.

2. Anordnung nach Anspruch 1,
**dadurch gekennzeichnet,**
**dass** das Kabelkanal-Element (7) einen Trennschenkel (12) zur Teilung des Kabelkanals (11) aufweist.

3. Anordnung zur Bildung eines Stromschienensystems für Leuchten, aufweisend
- eine U-förmige, nach unten offene Tragschiene (1) zum modularen Bilden des Stromschienensystems,
wobei die Tragschiene (1) einen Mittelschenkel (3) und zwei Seitenschenkel (2) umfasst und
- eine Seilaufhängung zur Befestigung der Tragschiene (1) an einer Decke,
wobei die Seilaufhängung ein Seil (5) und eine Befestigungsklammer (6) aufweist, wobei der Mittelschenkel (3) der Tragschiene (1) an seiner Außenseite Hinterschneidungen (4) aufweist und die Befestigungsklammer (6) der Seilaufhängung in die Hinterschneidungen (4) eingreift,
**gekennzeichnet durch**
ein Kabelführungselement aus einem oder mehreren U-förmigen Klemmelementen (14), welche an ihren Mittelschenkeln (15) Klemmvorsprünge (10) zur Befestigung an der Tragschiene (1) aufweisen, wobei an den Seitenschenkeln (16) der Klemmelemente (14) längliche Seitenwände (21) befestigt sind.

4. Anordnung nach Anspruch 3,
**dadurch gekennzeichnet,**
**dass** die Seitenschenkel (16) der Klemmelemente (14) Verrastelemente (17) zum Befestigen der länglichen Seitenwände (21) aufweisen.

5. Anordnung nach Anspruch 3 oder 4,
**dadurch gekennzeichnet,**
**dass** die Klemmelemente (14) einen zusätzlichen Trennschenkel (19) aufweisen.

6. Anordnung zur Bildung eines Stromschienensystems für Leuchten, aufweisend
- eine U-förmige, nach unten offene Tragschiene (1) zum modularen Bilden des Stromschienensystems,
wobei die Tragschiene (1) einen Mittelschenkel (3) und zwei Seitenschenkel (2) umfasst und
- eine Seilaufhängung zur Befestigung der Tragschiene (1) an einer Decke,
wobei die Seilaufhängung ein Seil (5) und eine Befestigungsklammer (6) aufweist, wobei der Mittelschenkel (3) der Tragschiene (1) an seiner Außenseite Hinterschneidungen (4) aufweist und die Befestigungsklammer (6) der Seilaufhängung in die Hinterschneidungen (4) eingreift,
**gekennzeichnet durch**
ein Kabelführungselement aus zwei länglichen Seitenteilen (25), die jeweils an einer Längsseite Klemmvorsprünge (10) zur Befestigung an der Tragschiene (1) aufweisen.

## Claims

1. Arrangement for forming a busbar system for lighting, comprising
- a U-shaped, downward opening support rail (1) for modular formation of the busbar system,
whereby the supporting rail (1) comprises a central leg (3) and two lateral limbs (2) and
- a suspension cable to attach the support rail (1) to a ceiling, whereby the suspension cable comprises a cable(5) and a mounting bracket (6), whereby the middle leg comprises (3) the supporting rail (1) undercuts on its outer side (4) and the fastening clip (6) of the suspension cable fitted into the undercuts (4),
**characterised by the fact**
a U-shaped cable duct element (7) comprising of a central leg (8), on the sides of elongated clamping projections (10) are provided for fixing the cable duct element (7) to the support rail (1) fitted in the undercuts (4) of the supporting rail (1).

2. Arrangement according to claim 1,
**characterised by the fact**
that the cable duct element (7) has a separating leg (12) for dividing the cable duct (11).

3. Arrangement for forming a busbar system for lighting, comprising of
- a U-shaped, downward opening support rail (1) for modular formation of the busbar system,
whereby the supporting rail (1) comprises a central leg (3) and two lateral limbs (2)
and includes
- a suspension cable for fixing the support rail (1) on a ceiling, whereby the suspension cable comprises, a cable (5) and a fastening clip(6), whereby the middle leg (3) of the supporting rail (1) comprises on its outer side of undercuts (4) and the mounting bracket (6) of the suspension cable engages into the undercuts (4),
**characterised by**
a cable guiding element from one or more U-shaped clamping elements (14) which on their central legs (15) comprise of clamping projections (10) for attachment to the mounting rail (1), whereby the side legs (16) of the clamping elements (14) are fixed to elongated side walls (21).

4. Arrangement according to claim 3,
**characterised by the fact**
that the side legs (16) of the clamping elements (14) comprise of locking in place elements (17) for securing the elongated side walls (21).

5. Arrangement according to claim 3 or 4,
**characterised by the fact**
that the clamping elements (14) have an additional separating leg (19).

6. Arrangement for forming a busbar system for lighting, comprising of
- a U-shaped, downward opening support rail (1) for modular formation of the busbar system,
whereby the supporting rail (1) comprises a central leg (3) and two lateral limbs (2) and
- a suspension cable for fixing the support rail (1) on a ceiling, whereby the suspension cable comprises of a cable (5) and a mounting bracket (6), whereby the middle leg (3) of the support rail (1) on its outer face has undercuts (4) and the mounting bracket (6) of the suspension cable engages into the undercuts (4), **characterised by**
a cable guiding element of two elongated side parts (25), each of which has clamping projections on one length (10) for attachment to the support rail (1).

## Revendications

1. Dispositif pour la formation d'un système de barres d'éclairage, comprenant
- une forme de U, ouverte vers le bas du rail de montage (1) pour la formation modulaire du système de barres,
dans lequel le rail de montage (1) comprend une branche centrale (3) et deux branches latérales (2) et
- un câble de suspension pour fixer le rail de montage (1) à un plafond, le câble de suspension (5) et un support de montage (6), dans lequel la branche médiane (3) du rail de support (1) comprend des contre-dépouilles sur ses côtés extérieurs (4) et le clip de fixation (6) de la suspension de câble s'engrène dans les contre-dépouilles (4),
**caractérisée par**
un élément de guidage des câbles en forme de U (7) ayant une patte centrale (8) et des saillies de serrage allongées (10) s'engrenant dans les contre-dépouilles (4) du rail de support (1) sont prévus sur le côté pour fixer l'élément de guidage des câbles (7) sur le rail de support (1).

2. Dispositif selon la revendication 1,
**caractérisé en ce que**
l'élément de guidage des câbles (7) présente une patte de séparation (12) pour diviser la conduite de câbles (11).

3. Dispositif pour la formation d'un système de barres d'éclairage, comprenant
- une forme de U, ouverte vers le bas du rail de montage (1) pour la formation modulaire du système de barres,
dans lequel le rail de montage (1) comprend une branche centrale (3) et deux branches latérales (2) et
- un câble de suspension pour la fixation du rail de support (1) sur un plafond,
dont le câble de suspension comprend un câble (5) et un support de montage (6), dont la branche médiane (3) du rail de support (1) comprend sur sa face externe des contre-dépouilles (4) et le clip de fixation (6) de la suspension de câble s'engrenant dans les contre-dépouilles (4),
**caractérisé en ce que**
un élément de guidage de câble d'un ou plusieurs éléments de serrage en forme de U (14) monté sur leurs branches (15) des saillies de serrage (10) de fixation au rail de montage (1), auxquelles les pattes latérales (16) des éléments de serrage (14) des parois latérales allongées (21) sont fixes.

4. Dispositif selon la revendication 3,
caractérisé en ce ce que les branches latérales (16) comprennent des éléments de serrage (14) des éléments d'encliquetage (17) pour fixer les parois latérales allongées (21).

5. Dispositif selon la revendication 3 ou 4,
**caractérisé en ce**
**que** les éléments de serrage (14) présentent une patte de séparation supplémentaire (19).

6. Dispositif pour la formation d'un système de barres d'éclairage, comprenant
- une forme de U, ouverte vers le bas le rail de montage (1) pour la formation modulaire du système de barres,
où le rail de montage (1) contient une branche médiane (3) et deux barres latérales (2)
- un câble de suspension pour la fixation du rail de support (1) sur un plafond, dont le câble de suspension comprend un câble (5) et un support de montage (6), dont la branche médiane (3) du rail de support (1) comprend sur sa face externe des contre-dépouilles (4) et le clip de fixation (6) de la suspension de câble s'engrène dans les contre-dépouilles (4),
**caractérisé en ce que**
il contient un élément de guidage du câble des deux parties latérales allongées (25), dont chacune a un côté longitudinal des saillies de serrage (10) pour la fixation au rail de support (1).
